# EUROPÄISCHE PATENTSCHRIFT

(11) **EP 2 217 825 B1**
(45) Veröffentlichungstag und Bekanntmachung des Hinweises auf die Patenterteilung: **06.09.2017**
(21) Anmeldenummer: 08847074.5
(22) Anmeldetag: 06.11.2008
(51) Int. Cl.: F16D 55/2265, F16D 65/00, F16D 55/00, F16F 1/38

(54) **SCHEIBENBREMSE FÜR EIN NUTZFAHRZEUG**
DISC BRAKE FOR A UTILITY VEHICLE
FREIN À DISQUE POUR VÉHICULE UTILITAIRE

(30) Priorität: 09.11.2007 DE 102007053902
(43) Veröffentlichungstag der Anmeldung: 18.08.2010
(73) Patentinhaber: KNORR-BREMSE Systeme für Nutzfahrzeuge GmbH, 80809 München (DE)
(72) Erfinder: FISCHER, Rudolf, 85435 Erding (DE); RAFFIN, Christian, 85630 Grasbrunn (DE); PESCHEL, Michael, 82296 Schöngeising (DE); ORGLER, Florian, 80335 München (DE)
(74) Vertreter: Mattusch, Gundula
(86) Internationale Anmeldenummer: PCT/EP2008/009366
(87) Internationale Veröffentlichungsnummer: WO 2009/059762

(56) Entgegenhaltungen:
- EP-A- 0 141 003
- WO-A-2005/124179
- DE-A1- 10 245 027
- DE-A1- 10 341 095
- GB-A- 1 560 676
- GB-A- 2 156 924

## Beschreibung

Die Erfindung betrifft eine Scheibenbremse für ein Nutzfahrzeug entsprechend dem Oberbegriff des Anspruchs 1.

Bei solchen Scheibenbremsen, die unter dem Begriff Schiebesattel-Scheibenbremsen bekannt sind, wird der Bremssattel durch Anschlusslagerungen mit dem fahrzeugseitigen Bremsträger verbunden. Dabei sind Führungsholme, die Bestandteil der Anschlusslagerungen sind und die üblicherweise durch Verschrauben am Bremsträger angeschlossen sind, in Gleitlagern des Bremssattels so geführt, dass eine axiale Verschiebung des Bremssattels gegenüber dem ortsfesten Bremsträger möglich ist.

Von den Gleitlagern ist eines als Festlager mit geringem Gleitspiel ausgebildet, während das andere als Loslager fungiert, wodurch insbesondere Fertigungstoleranzen ausgeglichen werden.

Neben den Führungsholmen umfassen die Anschlusslager radial elastische Dämpfungsbuchsen, die verhindern sollen, dass der unter Betriebsbedingungen in gewissem Umfang radial bewegbare Bremssattel am Führungsholm anschlägt, wodurch Klappergeräusche entstehen, die als störend empfunden werden, vor allem in Fahrzeugen, die zur Personenbeförderung eingesetzt werden.

Daneben dienen die Dämpfungsbuchsen der gleitenden Lagerung des Führungsholms, vornehmlich im Loslager, wo sie im Bremssattel bzw. in einer darin befestigten Lagerbuchse gehalten sind.

Eine solche Konstruktion ist aus der gattungsbildenden DE 102 45 027 A1 bekannt.

Die darin gezeigte Dämpfungsbuchse weist an ihrer inneren Umfangsfläche im Querschnitt gleichmäßige Stege auf, die jeweils benachbarte Nuten begrenzen, wobei durch diese Stege die Gleitfähigkeit des Führungsbolzens sowie die radialen Dämpfungseigenschaften beeinflusst werden.

Allerdings sind diese Dämpfungsbuchsen nicht geeignet, den unterschiedlichen Anforderungen im Fahrbetrieb, insbesondere hinsichtlich auftretender Erschütterungen, gerecht zu werden.

Insbesondere, wenn bei einem Festlager die Dämpfungsbuchsen in Kombination mit der Lagerbuchse gemeinsam das Gleitlager für den Führungsholm bilden, bei dem sowohl die Dämpfungsbuchse wie auch in axialer Fortsetzung die Lagerbuchse Gleitaufgaben übernehmen, kann es bei einer entsprechend starken radialen Belastung der Dämpfungsbuchse bzw. des Bremssattels insgesamt gegenüber dem Führungsholm zu einem Durchschlagen kommen, wobei die Dämpfungsbuchse, die im Übrigen vorzugsweise aus einem Elastomer besteht, aufgrund ihrer Dämpfungscharakteristik so weit zusammengedrückt wird, dass die metallische Lagerbuchse am Führungsholm anliegt. Dies führt zu den bereits genannten unangenehmen Klappergeräuschen, so dass die bekannte Scheibenbremse keine optimale Lösung hinsichtlich des Betriebskomforts bietet.

In der WO 2005/124179 A1 ist eine Scheibenbremse geoffenbart, bei der der Führungsholm des Loslagers von einer elastischen Hülse umschlossen ist, die außenseitig axial verlaufende Stege aufweist. Dabei dient die elastische Hülse, deren radial-elastische Wirkung gezielt einzustellen ist, vornehmlich dem Ausgleich von Fertigungstoleranzen.

Der Erfindung liegt die Aufgabe zugrunde, eine Scheibenbremse der gattungsgemäßen Art so weiterzuentwickeln, dass mit geringem konstruktiven und fertigungstechnischen Aufwand eine Verbesserung des Funktionskomforts und eine Erhöhung der Standzeit erreicht wird.

Diese Aufgabe wird durch eine Scheibenbremse mit den Merkmalen des Anspruchs 1 gelöst.

Eine solche Scheibenbremse zeichnet sich vor allem dadurch aus, dass die radialen Belastungen, die im Fahrbetrieb des Fahrzeuges auftreten, absolut sicher gedämpft werden und zwar so weit, dass das genannte Durchschlagen, im Prinzip die Aufhebung der Dämpfungseigenschaft durch Überwindung der Dämpfungskräfte, ausgeschlossen ist.

Vor allem dann, wenn die Dämpfungsbuchse im Bereich des Festlagers angeordnet ist, indem, wie erwähnt, sowohl die Dämpfungsbuchse wie auch die Lagerbuchse durch Anlage am Führungsholm Gleitfunktion übernehmen, wird wirksam verhindert, dass die Lagerbuchse bei entsprechenden fahrbedingten Erschütterungen gegen den Führungsholm schlägt. Eine daraus sich ergebende, unerwünschte Geräuschentwicklung wird durch die Erfindung ausgeschlossen. Da dadurch naturgemäß der Führungsholm einer geringeren mechanischen Belastung unterliegt, wird dessen Standzeit ebenso wie die der Lagerbuchse erhöht.

Aber auch bei einem Einsatz der Dämpfungsbuchse im Loslager bietet die Erfindung Vorteile, da durch den in radialer Belastungsrichtung progressiven Dämpfungsverlauf der Dämpfungsbuchse deren Führungseigenschaft verbessert wird. Mit zunehmender radialer Belastung wird nämlich die Dämpfungsbuchse in ihrem elastischen Verhalten steifer, wodurch sich der genannte Vorteil ergibt.

Nach der Erfindung ist vorgesehen, dass zumindest ein Teil der Stege dicker ist als die übrigen Stege. Alternativ oder additiv kann ein Teil der Stege breiter sein.

Die Querschnittskontur der Stege kann unterschiedlich sein, bevorzugt sind deren Flanken konkav gewölbt und gehen über in eine plane Deckfläche, die eine Anlagefläche am Führungsholm oder der Führungsbuchse sein kann. Denkbar ist aber auch, diese plane Deckfläche an die Kontur der Führungsbuchse bzw. der Lagerbuchse anzupassen.

Durch die genannte konkave Form der Flanken der Stege ergibt sich eine konkave Ausbildung der Nutenkontur, die kreisbogenförmig oder andersartig kurvenförmig ausgebildet ist.

Der Verlauf der Stege kann umfänglich, axial oder diagonal sein. Ebenso ist denkbar, die äußere und innere Umfangsfläche der Dämpfungsbuchse mit Stegen zu versehen, wobei auch hier zumindest ein Teil der Stege mit ihren Deckflächen Anlageflächen am Führungsholm bzw. an der Lagerbuchse bilden.

Bei einer entsprechenden radialen Beanspruchung können sich die in ihrem Progressionsverhalten daran angepassten Stege zunächst so weit verformen, dass diese mit den benachbarten Nuten eine insoweit übergangslose Fläche bilden. Erst bei weiterer zunehmender Belastung kommen die übrigen, dazu ausgelegten Stege sozusagen zum Einsatz. Es ist erkennbar, dass ein sehr fein abgestimmtes Dämpfungsverhalten der Dämpfungsbuchse vorbestimmbar und damit problemlos realisierbar ist.

Ein weiterer wesentlicher Vorteil der Erfindung besteht darin, dass diese Komforterhöhung der Scheibenbremse ohne Mehrkosten gegenüber den bisher eingesetzten Dämpfungsbuchsen zu erzielen ist, was insbesondere unter Berücksichtigung der Fertigung als Serienprodukt, das in großen Stückzahlen hergestellt wird, besonders beachtenswert ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse in einer geschnittenen Seitenansicht
- Figur 2: eine Einzelheit der Scheibenbremse in einer Draufsicht
- Figur 3: die Einzelheit in einer Seitenansicht
- Figur 4: die Einzelheit in einer geschnittenen Seitenansicht
- Figuren 5 und 6: jeweils einen Teilausschnitt der Einzelheit in unterschiedlichen Funktionsstellungen
- Figur 7: ein Diagramm zur Verdeutlichung der Erfindung
- Figuren 8 bis 10: jeweils ein weiteres Ausführungsbeispiel der Erfindung in einer geschnittenen Seitenansicht

Figuren 11 und 12 jeweils ein weiteres Ausführungsbeispiel in einer Draufsicht.

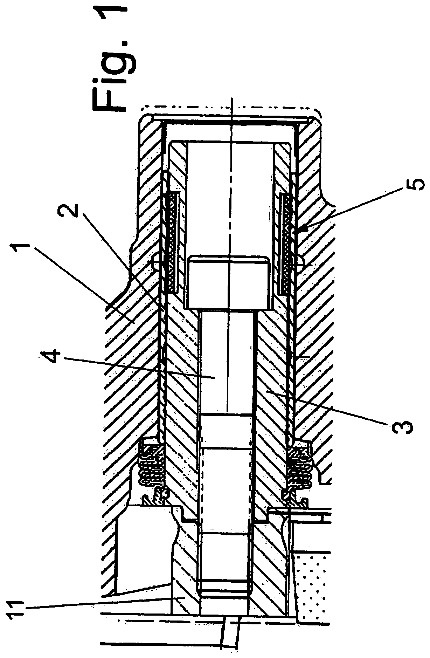

In der Figur 1 ist ein Teil einer Scheibenbremse, insbesondere für ein Nutzfahrzeug dargestellt, mit einem eine nicht gezeigte Bremsscheibe umfassenden Bremssattel 1, der an einem Bremsträger 11 durch zwei Anschlusslagerungen, bezogen auf die Bremsscheibe, axial verschiebbar befestigt ist.

Dabei weisen die Anschlusslagerungen jeweils einen mit dem Bremsträger 11 fest verbundenen Führungsholm 3 auf, von denen einer in einem als Loslager und der andere in einem als Festlager ausgebildeten Gleitlager zur axialen Verschiebbarkeit des Bremssattels 1 geführt ist. Im Ausführungsbeispiel ist der Bereich des Festlagers dargestellt.

Der Führungsholm 3 ist in einer im Bremssattel 1 befestigten, als Gleitlager aus einem geeigneten Material bestehenden Lagerbuchse 2 gelagert, die auf dem Führungsholm 3 bei Betätigung der Scheibenbremse gleitet. Im Übrigen ist der Führungsholm 3 mittels einer Schraube 4 mit dem Bremsträger 11 verschraubt.

Der Führungsholm 3 des dargestellten Festlagers weist am Außenumfang einen radial elastisch verformbaren Abschnitt in Form einer Dämpfungsbuchse 5 auf. Diese Dämpfungsbuchse 5 ist aus einem elastischen Material, vorzugsweise aus einem Elastomer, Gummi oder dergleichen gebildet und weist erfindungsgemäß ein in radialer Belastungsrichtung progressives Dämpfungsverhalten auf.

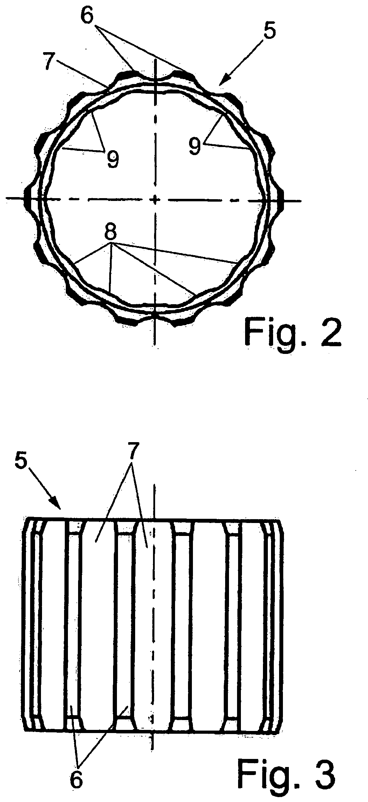

Hierzu sind bei dem in den Figuren 2 bis 6 gezeigten Beispiel der Dämpfungsbuchse 5 auf der äußeren Umfangsfläche eine Vielzahl von gleichmäßig verteilten gleich großen Nuten 7 vorgesehen, die sich axial über die gesamte Länge der Dämpfungsbuchse 5 erstrecken und jeweils durch äußere Stege 6 seitlich begrenzt sind, die eine Anlagefläche an der Lagerbuchse 2 bilden.

Die innere Umfangsfläche der Dämpfungsbuchse 5 ist ebenfalls mit Nuten versehen, die das Bezugszeichen 8 tragen und die sich gleichfalls axial über die gesamte Länge der Dämpfungsbuchse 5 erstrecken. Diese Nuten 9 sind im Beispiel in ihrer Breite gleich groß bemessen und in gleichem Abstand über die innere Umfangsfläche verteilt. Begrenzt werden die Nuten 9 durch innere Stege 8, die sich am Führungsholm 3 abstützen. Sowohl die äußeren Stege wie auch die inneren Stege 8 verlaufen parallel zueinander.

Die innen liegenden Nuten 9 sind im Überdeckungsbereich der äußeren Stege 6 angeordnet und in ihrer Breite kleiner gehalten als die außen liegenden Nuten 7, wobei die Mittelachsen der äußeren Stege 6 auf einer radialen Ebene mit den Mittelachsen der innen liegenden Nuten 9 liegen, ebenso wie die Mittelachsen der äußeren Nuten 7 auf einer radialen Ebene mit den inneren Stegen 8 verlaufen.

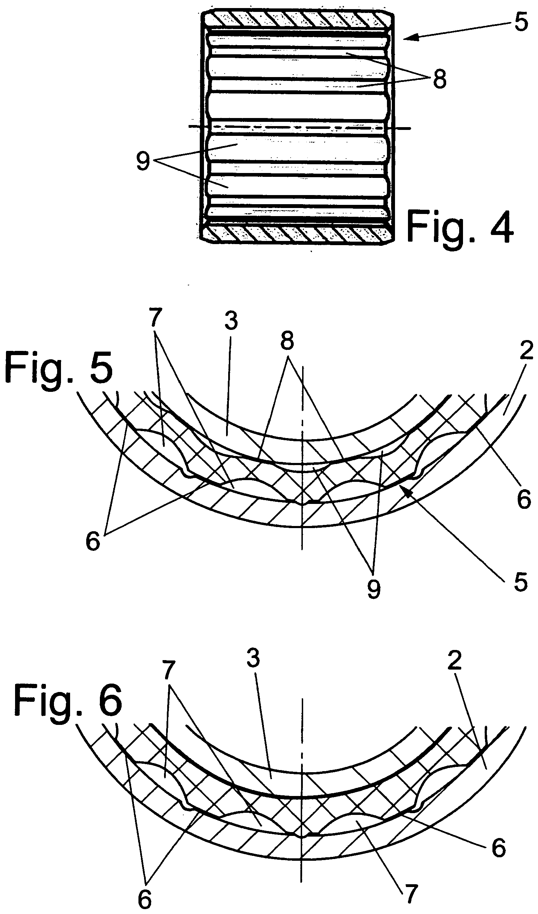

In der Figur 5 ist eine Position dargestellt, in der die Dämpfungsbuchse 5 radial teilbelastet ist. Es ist zu erkennen, dass die Breite der im Querschnitt bogenförmigen inneren Nuten 9 kleiner ist als die Breite der gleichfalls bogenförmigen äußeren Nuten 7, wobei der Krümmungsradius der inneren Nuten 9 und der äußeren Nuten 7 gleich ist, die Tiefe hingegen unterschiedlich, woraus sich eine unterschiedliche Breite ergibt.

Da dadurch die Dicke der Dämpfungsbuchse 5 im Bereich der äußeren Stege 6 und der inneren Nuten 9 größer ist als die Dicke im Bereich der äußeren Nuten 7 und der inneren Stege 8, führt dies zu einem unterschiedlichen Progressionsverhalten, d.h., zu einem unterschiedlichen Verformen der Dämpfungsbuchse 5, entsprechend der Darstellung in der Figur 6.

Hierbei ist aufgrund wirksamer radialer Kräfte die Dämpfungsbuchse 5 so verformt, dass die inneren Stege 8 und die benachbarten inneren Nuten 9 eine nahezu gleichmäßig gekrümmte Fläche bilden.

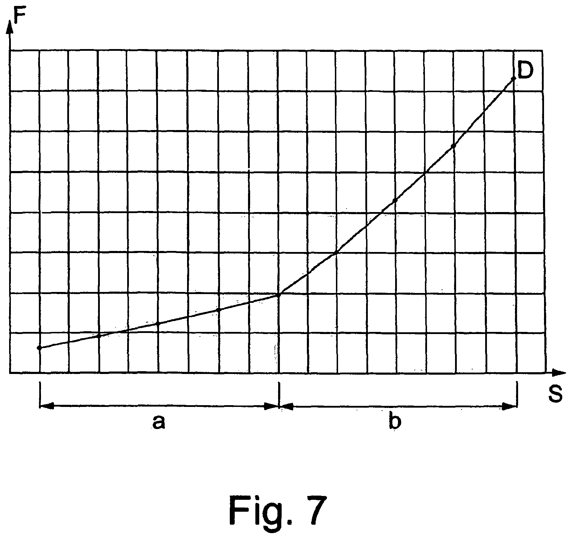

In der Figur 7 ist in einem Diagramm das progressive Dämpfungsverhalten der Dämpfungsbuchse 5 in radialer Belastungsrichtung dargestellt.

Dabei ist auf der Abszisse S der Verformungsweg und auf der Ordinate F die wirksame Radialkraft angetragen, während der Progressionsverlauf mit D bezeichnet ist.

Es ist erkennbar, dass der Progressionsanstieg bei einer teilweisen Verformung, entsprechend der Figur 5, relativ flach verläuft, innerhalb der Strecke a, während der weiteren radialen Belastung die inneren Stege 8 vollständig zusammengepresst werden und der Progressionsverlauf D steiler ansteigt, wobei die Verformungsstrecke, wie sie sich aus der Figur 6 ergibt, mit b angegeben ist.

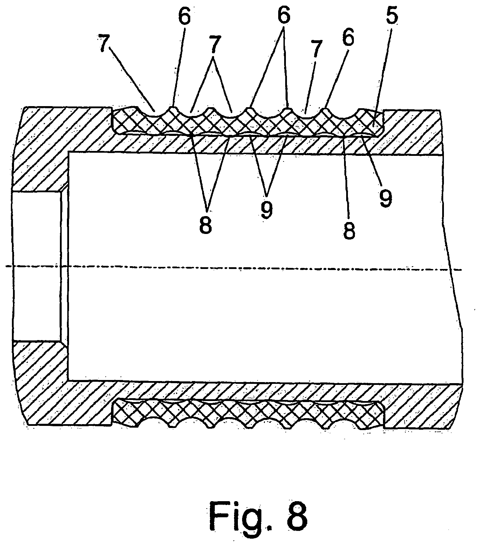

In der Figur 8 ist ein Ausführungsbeispiel der Dämpfungsbuchse 5 gezeigt, die hinsichtlich ihre Dimensionierung der Stege 6, 8 und äußeren bzw. inneren Nuten 7, 9 denen im Beispiel der Figuren 2 bis 6 entspricht, ebenso der Anordnungsverhältnisse zueinander. Im Unterschied zu diesem Beispiel, ist die Dämpfungsbuchse 5 nach der Figur 8 mit umlaufenden Nuten 7, 9 bzw. Stegen 6, 8 versehen.

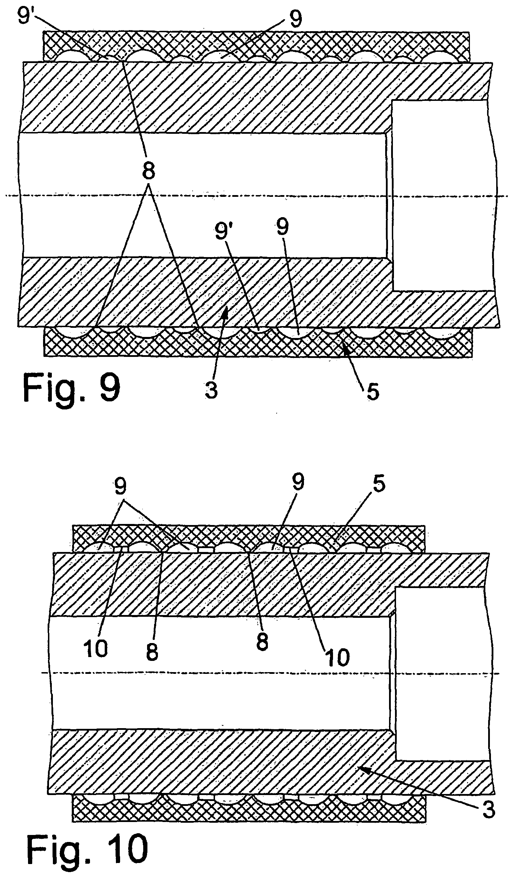

Solche umlaufenden Stege sind in der Variante gemäß Figur 9 dargestellt. Hier jedoch weist die Dämpfungsbuchse 5 ausschließlich innere Stege 8 sowie zugeordnete Nuten 9, 9' auf, wobei die Nuten 9' im Querschnitt kleiner sind als die Nuten 9, was durch eine geringere Tiefe der Nuten 9' bei gleichem Krümmungsradius wie die Nuten 9 erreicht wird.

Bedingt durch die geringere Tiefe der Nuten 9' sind auch die diese begrenzenden Stege 8 in ihrem Abstand zueinander enger als die die größeren Nuten 9 begrenzenden.

In der Figur 10 ist eine Dämpfungsbuchse 5 dargestellt, die ebenfalls lediglich innere Stege 8 aufweist, die an dem Führungsholm 3 anliegen. Die äußere Umfangsfläche der Dämpfungsbuchse 5 ist ebenso profillos wie die der Dämpfungsbuchse 5 nach Figur 9.

Bei dem Beispiel nach der Figur 10 liegt nur jeder zweite innere Steg 8 an dem Führungsholm 3 an, während ein dazwischenliegender, zwei benachbarte Nuten 9 begrenzender Steg 10 mit Abstand zur Mantelfläche des Führungsholms 3 verläuft.

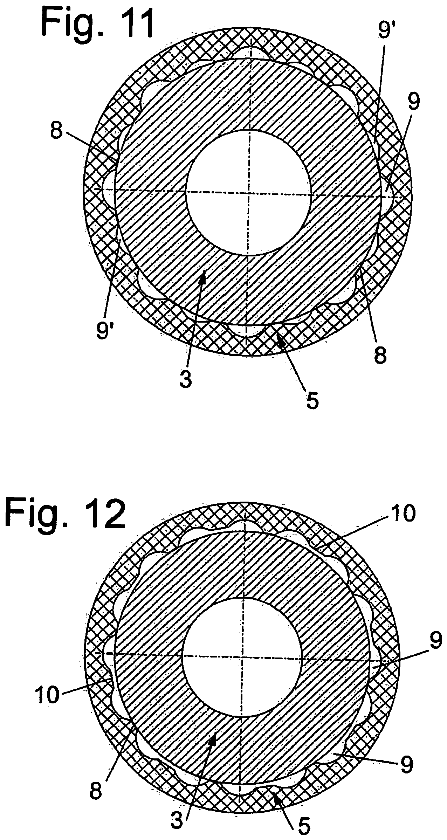

Vergleichbar der Figur 9 hinsichtlich der Gestaltung der inneren Stege 8 sowie der Nuten 9, 9' ist die Dämpfungsbuchse 5, die in der Figur 11 gezeigt ist. Dabei ist jeweils zwischen zwei gleichen Nuten 9 eine im Querschnitt kleinere Nut 9' angeordnet mit den entsprechenden, zu Figur 9 beschriebenen Abständen der Stege 8.

Dieser gegenüber sind die in der Figur 11 erkennbaren Stege 8 bzw. Nuten 9, 9' α-xial verlaufend angeordnet, ebenso wie die in der Figur 12 dargestellten, in der die Anordnung bzw. Ausgestaltung der Stege 8, 10 denen der Figur 10 entspricht, d.h., jeweils zwischen zwei Stegen 8, die an der Mantelfläche des Führungsholms 3 anliegen, ist ein Steg 10 abständig zum Führungsholm 3 ausgeformt, der jeweils die benachbarten Nuten 9 an einer Seite begrenzt.

Selbstverständlich sind auch andere Konturen der Stege 6, 8, 10 als die dargestellten denkbar, beispielsweise mit schrägen Flanken.

Auch die Anordnung bzw. Arretierung der Dämpfungsbuchse 5 kann je nach Erfordernis variieren. So kann die Dämpfungsbuchse 5 in einer zum Führungsholm 3 hin offenen Nut einliegen, oder zwischen zwei Lagerbuchsenteilen, wozu die Lagerbuchse 2 zweiteilig ausgebildet ist. In diesem Fall kann die Dämpfungsbuchse 5 zusätzlich in einer umfänglichen Nut des Bremssattels positioniert sein, die zum Führungsholm 3 hin offen ist, an dem die Dämpfungsbuchse 5 in jedem Fall anliegt.

### Bezugszeichenliste

- 1: Bremssattel
- 2: Lagerbuchse
- 3: Führungsholm
- 4: Schraube
- 5: Dämpfungsbuchse
- 6: Äußerer Steg
- 7: Nut
- 8: Innerer Steg
- 9: Nut
- 9': Nut
- 10: Steg
- 11: Bremsträger

## Patentansprüche

1. Scheibenbremse für ein Nutzfahrzeug, mit einem eine Bremsscheibe umfassenden Bremssattel (1), der an einem fahrzeugseitigen Bremsträger (11) durch zwei Anschlusslagerungen, bezogen auf die Bremsscheibe, axial verschiebbar befestigt ist, wobei die Anschlusslagerungen jeweils einen mit dem Bremsträger (11) fest verbundenen, in einem Gleitlager des Bremssattels zu dessen axialen Verschiebung geführten Führungsholm (3) aufweisen und zumindest eine Anschlusslagerung mit einer radial elastischen, den Führungsholm (3) bereichsweise umschließenden Dämpfungsbuchse (5) versehen ist, die durch Stege (6, 8, 10) seitlich begrenzte Nuten (7, 9, 9') aufweist, **dadurch gekennzeichnet, dass** die Dämpfungsbuchse (5) in radialer Belastungsrichtung ein progressives Dämpfungsverhalten aufweist, durch das die Dämpfungsbuchse (5) mit zunehmender radialer Belastung steifer wird, wozu zumindest ein Teil der Stege (6, 8, 10) dicker und/oder breiter als die übrigen Stege ist.

2. Scheibenbremse nach Anspruch 1, **dadurch gekennzeichnet, dass** das progressive Dämpfungsverhalten über Teilbereiche unterschiedlich ist.

3. Scheibenbremse nach Anspruch 1 oder 2, **dadurch gekennzeichnet, dass** die Stege (6, 8, 10) an der inneren und/oder der äußeren Umfangsfläche der Dämpfungsbuchse (5) vorgesehen sind.

4. Scheibenbremse nach einem der vorhergehenden Ansprüche, **dadurch gekennzeichnet, dass** die Stege (6, 8, 10) axial, umfänglich oder diagonal verlaufen.

5. Scheibenbremse nach einem der vorhergehenden Ansprüche, **dadurch gekennzeichnet, dass** die Nuten (7, 9, 9') bei axialem Verlauf sich über die gesamte Länge der Dämpfungsbuchse (5) erstrecken.

6. Scheibenbremse nach einem der vorhergehenden Ansprüche, **dadurch gekennzeichnet, dass** die Stege (6, 8) Anlageflächen für eine Lagerbuchse (2) und/oder den Führungsholm (3) bilden.

7. Scheibenbremse nach einem der vorhergehenden Ansprüche, **dadurch gekennzeichnet, dass** die äußeren Stege (6) und die inneren Stege (8) in gleichem Winkelabstand zueinander verlaufen.

8. Scheibenbremse nach einem der vorhergehenden Ansprüche, **dadurch gekennzeichnet, dass** die Breiten der äußeren Stege (6) gleich sind, ebenso wie die Breiten der inneren Stege (8).

9. Scheibenbremse nach einem der vorhergehenden Ansprüche, **dadurch gekennzeichnet, dass** die Mittellängsachse jedes äußeren Steges (6) und die Mittellängsachse einer zugeordneten inneren Nut (9) in einer gemeinsamen radialen Ebene liegen, ebenso wie die Mittellängsachse jeder äußeren Nut (7) und die Mittellängsachse eines zugeordneten inneren Steges (8).

10. Scheibenbremse nach einem der vorhergehenden Ansprüche, **dadurch gekennzeichnet, dass** die Breiten der inneren Nuten (9) kleiner sind als die Breiten der äußeren Nuten (7).

11. Scheibenbremse nach einem der vorhergehenden Ansprüche, **dadurch gekennzeichnet, dass** die Stege (6, 8, 10) parallel zueinander verlaufen.

12. Scheibenbremse nach einem der vorhergehenden Ansprüche, **dadurch gekennzeichnet, dass** die äußeren Stege (6) und/oder die inneren Stege (8) im Querschnitt konkav gewölbte Flanken aufweisen.

13. Scheibenbremse nach einem der vorhergehenden Ansprüche, **dadurch gekennzeichnet, dass** der Krümmungsradius der Flanken der inneren Stege (8) und der der äußeren Stege (6) gleich ist.

14. Scheibenbremse nach einem der vorhergehenden Ansprüche, **dadurch gekennzeichnet, dass** die Dicke der Dämpfungsbuchse (5) im Bereich der äußeren Stege (6) und den zugeordneten inneren Nuten (9) unterschiedlich ist zu der Dicke im Bereich der äußeren Nuten (7) und der zugeordneten inneren Stege (8).

15. Scheibenbremse nach einem der vorhergehenden Ansprüche, **dadurch gekennzeichnet, dass** zwischen zwei im Querschnitt gleich großen Nuten (9) mindestens eine im Querschnitt kleinere Nut (9') angeordnet ist.

16. Scheibenbremse nach einem der vorhergehenden Ansprüche, **dadurch gekennzeichnet, dass** zwischen zwei am Führungsholm (3) oder der Lagerbuchse (2) anliegenden Stegen (8) mindestens ein Steg (10) mit Abstand zum Führungsholm (3) bzw. zur Lagerbuchse (2) vorgesehen ist.

## Claims

1. Disc brake for a utility vehicle, having a brake calliper (1) which encompasses a brake disc and which is fastened by means of two attachment bearings to a vehicle-side brake carrier (11) so as to be axially displaceable relative to the brake disc, wherein the attachment bearings have in each case one guide bar (3) which is fixedly connected to the brake carrier (11) and which is guided in a plain bearing of the brake calliper for the axial displacement of the latter, and at least one attachment bearing is equipped with a radially elastic damping bushing (5) which surrounds the guide bar (3) in regions, which damping bushing has grooves (7, 9, 9') laterally delimited by webs (6, 8, 10), **characterized in that** the damping bushing (5) has a progressive damping characteristic in a radial loading direction, by means of which progressive damping characteristic the damping bushing (5) becomes stiffer with increasing radial loading, for which purpose at least some of the webs (6, 8, 10) are thicker and/or wider than the other webs.

2. Disc brake according to Claim 1, **characterized in that** the progressive damping characteristic varies over subregions.

3. Disc brake according to Claim 1 or 2, **characterized in that** the webs (6, 8, 10) are provided on the inner and/or the outer circumference of the damping bushing (5).

4. Disc brake according to one of the preceding claims, **characterized in that** the webs (6, 8, 10) run axially, circumferentially or diagonally.

5. Disc brake according to one of the preceding claims, **characterized in that** the grooves (7, 9, 9'), in axial profile, extend over the entire length of the damping bushing (5).

6. Disc brake according to one of the preceding claims, **characterized in that** the webs (6, 8) form contact surfaces for a bearing bushing (2) and/or the guide bar (3).

7. Disc brake according to one of the preceding claims, **characterized in that** the outer webs (6) and the inner webs (8) run with equal angular intervals to one another.

8. Disc brake according to one of the preceding claims, **characterized in that** the widths of the outer webs (6) are equal, in the same way as the widths of the inner webs (8).

9. Disc brake according to one of the preceding claims, **characterized in that** the central longitudinal axis of each outer web (6) and the central longitudinal axis of an associated inner groove (9) lie in a common radial plane, in the same way as the central longitudinal axis of each outer groove (7) and the central longitudinal axis of an associated inner web (8).

10. Disc brake according to one of the preceding claims, **characterized in that** the widths of the inner grooves (9) are smaller than the widths of the outer grooves (7).

11. Disc brake according to one of the preceding claims, **characterized in that** the webs (6, 8, 10) run parallel to one another.

12. Disc brake according to one of the preceding claims, **characterized in that** the outer webs (6) and/or the inner webs (8) have flanks which are concavely curved in cross section.

13. Disc brake according to one of the preceding claims, **characterized in that** the radius of curvature of the flanks of the inner webs (8) and that of the outer webs (6) are equal.

14. Disc brake according to one of the preceding claims, **characterized in that** the thickness of the damping bushing (5) in the region of the outer webs (6) and the associated inner grooves (9) differs from the thickness in the region of the outer grooves (7) and the associated inner webs (8) .

15. Disc brake according to one of the preceding claims, **characterized in that**, between two grooves (9) of equal size in cross section, there is arranged at least one groove (9') of relatively small cross section.

16. Disc brake according to one of the preceding claims, **characterized in that**, between two webs (8) which bear against the guide bar (3) or the bearing bushing (2), there is provided at least one web (10) which has a spacing to the guide bar (3) or to the bearing bushing (2).

## Revendications

1. Frein à disque pour un véhicule utilitaire, comprenant un étrier (1) de frein ayant un disque de frein et fixé de manière à pouvoir coulisser axialement rapporté au disque de frein par deux supports de raccordement, les supports de raccordement ayant chacun un longeron (3) de guidage solidaire du porte-frein (11) et guidé pour son coulissement axial dans un palier lisse de l'étrier de frein et au moins un support de raccordement est pourvu d'une douille (5) d'amortissement, élastique radialement, qui entoure par endroit le longeron (3) de guidage et qui a des rainures (7, 9, 9') limitées latéralement par des nervures (6, 8, 10), **caractérisé en ce que** la douille (5) d'amortissement a, dans la direction de charge radiale, une propriété d'amortissement progressive, par laquelle la douille (5) d'amortissement devient de plus en plus rigide au fur et à mesure qu'augmente sa charge radiale, au moins une partie des nervures (6, 8, 10) étant à cet effet plus épaisses et/ou plus larges que les autres nervures.

2. Frein à disque suivant la revendication 1, **caractérisé en ce que** la propriété d'amortissement progressive est différente sur des zones partielles.

3. Frein à disque suivant la revendication 1 ou 2, **caractérisé en ce que** les nervures (6, 8, 10) sont prévues sur la face périphérique intérieure et/ou la face périphérique extérieure de la douille (5) d'amortissement.

4. Frein à disque suivant l'une des revendications précédentes, **caractérisé en ce que** les nervures (6, 8, 10) s'étendent axialement, périphériquement ou en diagonale.

5. Frein à disque suivant l'une des revendications précédentes, **caractérisé en ce que** les rainures (7, 9, 9') s'étendent dans le tracé axial sur toute la longueur de la douille (5) d'amortissement.

6. Frein à disque suivant l'une des revendications précédentes, **caractérisé en ce que** les nervures (6, 8) forment des surfaces d'application d'un coussinet (2) et/ou du longeron (3) de guidage.

7. Frein à disque suivant l'une des revendications précédentes, **caractérisé en ce que** les nervures (6) extérieures et les nervures (8) intérieures s'étendent, les unes par rapport aux autres, à une même distance angulaire.

8. Frein à disque suivant l'une des revendications précédentes, **caractérisé en ce que** les largeurs des nervures (6) extérieures sont égales, tout comme les largeurs des nervures (8) intérieures.

9. Frein à disque suivant l'une des revendications précédentes, **caractérisé en ce que** l'axe longitudinal médian de chaque nervure (6) extérieure et l'axe longitudinal médian d'une rainure (9) intérieure associée sont dans un plan radial commun, tout comme l'axe longitudinal médian de chaque rainure (7) extérieure et l'axe longitudinal médian d'une nervure (8) intérieure associée.

10. Frein à disque suivant l'une des revendications précédentes, **caractérisé en ce que** les largeurs des rainures (9) intérieures sont plus petites que les largeurs des rainures (7) extérieures.

11. Frein à disque suivant l'une des revendications précédentes, **caractérisé en ce que** les nervures (6, 8, 10) sont parallèles entre elles.

12. Frein à disque suivant l'une des revendications précédentes, **caractérisé en ce que** les nervures (6) extérieures et/ou les nervures (8) intérieures ont des flancs courbés de manière concave en section transversale.

13. Frein à disque suivant l'une des revendications précédentes, **caractérisé en ce que** le rayon de courbure des flancs des nervures (8) intérieures et celui des nervures (6) extérieures sont égaux.

14. Frein à disque suivant l'une des revendications précédentes, **caractérisé en ce que** l'épaisseur de la douille (5) d'amortissement est, dans la zone des nervures (6) extérieures et des rainures (9) intérieures associées, différente de l'épaisseur dans la zone des rainures (7) extérieures et des nervures (8) intérieures associées.

15. Frein à disque suivant l'une des revendications précédentes, **caractérisé en ce qu'**au moins une rainure (9') de section transversale plus petite est disposée entre deux rainures (9) de même grande section transversale.

16. Frein à disque suivant l'une des revendications précédentes, **caractérisé en ce qu'**entre deux rainures (8), s'appliquant au longeron (3) de guidage ou au coussinet (2), est prévue au moins une nervure (10) à distance du longeron (3) de guidage ou du coussinet (2).
